# EUROPEAN PATENT APPLICATION

(11) **EP 4 851 019 A1**
(43) Date of publication of application: **09.12.2026**
(21) Application number: 26171092.5
(22) Date of filing: 08.04.2026
(51) Int. Cl.: B62D 25/02, B62D 21/15, B62D 25/04, B62D 27/02

(54) **VEHICLE SIDE STRUCTURE**

(30) Priority: 03.06.2025 JP 2025092544
(71) Applicant: Suzuki Motor Corporation, Hamamatsu-shi, Shizuoka 432-8611 (JP)
(72) Inventor: FURUKAWA, Toru, HAMAMATSU-SHI, 432-8611 (JP); USUDA, Yoshitaka, HAMAMATSU-SHI, 432-8611 (JP)
(74) Representative: Plasseraud IP

(57) **Abstract**

[Problem to be Solved] To reduce deformation of a front portion of a side sill when a load is transmitted to the side sill.

[Solution] Each side sill 20 of a vehicle side structure includes: an upper reinforcing panel 50A that is arranged inside a side sill closed section structure; and a lower reinforcing panel 50B that is arranged below the upper reinforcing panel 50A, the upper reinforcing panel 50A includes an upper outer flange 52a that is joined between an upper portion of the side sill inner panel 21 and an upper portion of the outer panel 40, an outer upper surface portion 52 that projects outward from a lower end of the upper outer flange 52a, and an upper outer wall portion 51 that extends downward from an outer end of the outer upper surface portion 52, an upper portion of the lower reinforcing panel 50B is joined to the upper outer wall portion 51, and a lower portion of the lower reinforcing panel 50B is joined to a lower portion of the side sill inner panel 21.

## Description

### [Technical Field]

The present invention relates to vehicle side structures.

### [Background Art]

For example, when an impact load caused by front collision acts on a vehicle front portion, some of the impact load is transmitted to the vehicle rear side via, for example, side members that are arranged on the outer side of the vehicle front portion in the vehicle width direction. The side members, which are members that constitute a vehicle body frame of the vehicle front portion, are arranged on the inner side of front wheels in the vehicle width direction and extend in the vehicle front-rear direction. Furthermore, a vehicle interior is arranged on the vehicle rear side of the side members. It is desirable that members and equipment provided at the vehicle front portion do not enter the vehicle interior due to the action of the impact load.

To this end, the structure disclosed in Patent Literature 1 allows some of an impact load due to front collision or the like to be transmitted, for example, to side sills arranged behind side members via the side members. The side sills are members constituting a vehicle body frame at vehicle side portions and are arranged on both sides of the vehicle interior. In the structure of the above example, deformation portions provided at front portions of the side sills are deformed to absorb an impact load when the impact load is transmitted to the side sills, such that deformation of the side sills located on the side further rearward than the deformation portions is reduced.

### [Citation List]

### [Patent Literature]

### [Patent Literature 1] JP 2013-216153 A

### [Summary of Invention]

### [Problem to be Solved by the Invention]

In the structure of the above example, front pillars or the like are joined to the front portions of the side sills. Since the front pillars are arranged on the outer side of the front portion of the vehicle chamber in the vehicle width direction and constitute parts of the vehicle body frame, it is desirable to secure predetermined rigidity against an impact load. Therefore, parts at which the front portions of the side sills and lower portions of the front pillars are joined preferably have high rigidity.

However, since the deformation portions are provided at the front portions of the side sills and below the front pillars in the structure of the above example, the front pillars may be deformed to fall down rearward, for example, if a load that is greater than expected is input to the side sills and deformation occurs starting from the formation portions of the side sills.

If deformation occurs in such a way that the front pillars fall down, it is difficult to cause some of the impact load to transmit from the front portions of the side sills to the front pillars. Therefore, there is room for improvement in the structure of the above example in an attempt to disperse the load input to the front portions of the side sills to the front pillars while transmitting it to the side behind the side sills.

An object of the present invention, which has been made to solve the above problem, is to provide a vehicle side structure capable of reducing deformation of front portions of side sills and effectively dispersing an impact load caused by front collision when the impact load is transmitted to the side sills via a vehicle body frame at a vehicle front portion.

### [Means for Solving the Problem]

A vehicle side structure according to the present invention to achieve the above object includes: side sills that are arranged on both sides in a vehicle width direction and extend in a vehicle front-rear direction; and front pillars that extend toward a vehicle upper side from front portions of the side sills, each of the side sills including an inner panel and an outer panel arranged on an outer side of the inner panel in the vehicle width direction, a closed section structure being composed of the inner panel and the outer panel. In the vehicle side structure, each of the side sills further includes an upper reinforcing panel that is arranged inside the closed section structure and extends in the vehicle front-rear direction and, a lower reinforcing panel that is arranged inside the closed section structure and below the upper reinforcing panel and extends in the vehicle front-rear direction, the upper reinforcing panel includes an upper joined portion that is joined between an upper portion of the inner panel and an upper portion of the outer panel, an upper surface portion that projects outward in the vehicle width direction from a lower end of the upper joined portion, and an outer portion that extends toward a vehicle lower side from an outer end of the upper surface portion in the vehicle width direction, and an upper portion of the lower reinforcing panel is joined to the outer portion, and a lower portion of the lower reinforcing panel is joined to a lower portion of the inner panel.

### [Advantageous Effect of Invention]

According to the present invention, it is possible to reduce deformation of front portions of side sills and to effectively disperse an impact load caused by front collision when the impact load is transmitted to the side sills via a vehicle body frame at a vehicle front portion.

### [Brief Description of Drawings]

[Figure 1] Figure 1 is a side view of a vehicle side structure according to the present invention when seen from a vehicle outer side.
[Figure 2] Figure 2 is a perspective view of a connecting portion between a front pillar portion and a side sill portion in Figure 1 when seen from a vehicle upper side.
[Figure 3] Figure 3 is a perspective view in which a side body outer panel in Figure 2 is omitted when seen from a vehicle front side.
[Figure 4] Figure 4 is an end view of the side sill in Figure 2 along the arrow A-A.
[Figure 5] Figure 5 is a perspective view showing a section of the side sill in Figure 3 along the arrow B-B.
[Figure 6] Figure 6 is a perspective view seen through an upper reinforcing panel in Figure 3 and from the vehicle outer side.
[Figure 7] Figure 7 is a perspective view in which the upper reinforcing panel in Figure 6 is omitted.
[Figure 8] Figure 8 is a perspective view of a section including a flange portion of a bulkhead in Figure 5 when seen from the vehicle upper side.

### [Mode for Carrying Out the Invention]

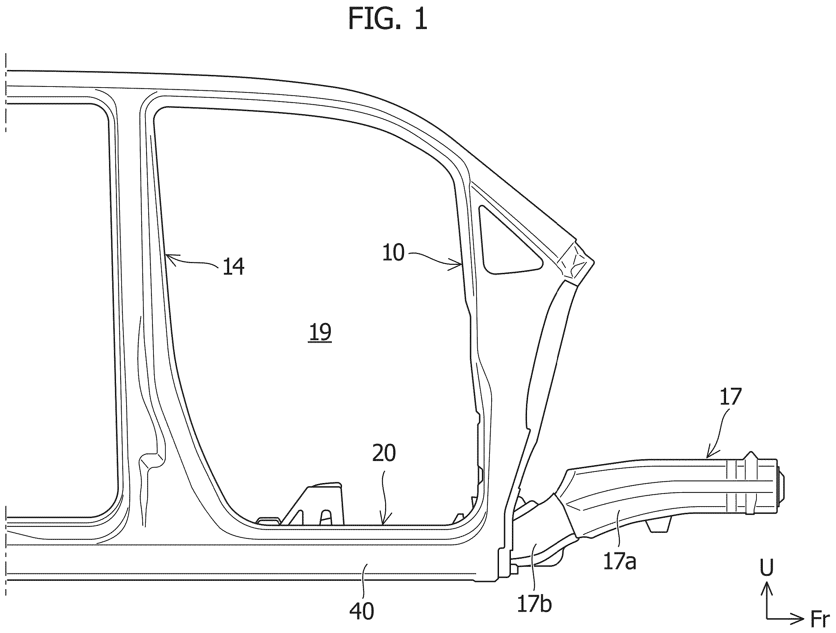

Hereinafter, an embodiment of a lower structure of an electric vehicle according to the present invention will be described with reference to the drawings (Figures 1 to 8). Note that in the drawings, the direction of the arrow Fr indicates the front side in the vehicle front-rear direction. "A front portion (front end) and a rear portion (rear end)" in the description of the embodiment correspond to a front portion and a rear portion in the vehicle front-rear direction. Furthermore, the arrow R and the arrow L indicate the right side and the left side when a passenger sees the vehicle front side. Moreover, the arrow U indicates the upper side in the vehicle up-down direction.

A vehicle side structure of the present embodiment includes side sills that are arranged at both side portions in the vehicle width direction and extend in the vehicle front-rear direction and front pillars 10 that extend toward the vehicle upper side from front portions of the side sills 20. Each side sill 20 includes a side sill inner panel 21 and a side body outer panel 40 that is arranged on the outer side of the side sill inner panel 21 in the vehicle width direction, and the side sill inner panel 21 and the side body outer panel 40 constitute a side sill closed section structure 20a. The side sill 20 further includes an upper reinforcing panel 50A that is arranged inside the side sill closed section structure 20a and extends in the vehicle front-rear direction and a lower reinforcing panel 50B that is arranged inside the side sill closed section structure 20a and below the upper reinforcing panel 50A and extends in the vehicle front-rear direction. The upper reinforcing panel 50A includes an upper outer flange 52a (upper joined portion) that is joined between an upper portion of the side sill inner panel 21 and an upper flange 41a of the side body outer panel 40 (an upper portion of an outer panel), an outer upper surface portion 52 (upper surface portion) that projects outward in the vehicle width direction from a lower end of the upper outer flange 52a, and an upper outer wall portion 51 (outer portion) that extends toward the vehicle lower side from an outer end of the outer upper surface portion 52 in the vehicle width direction. An upper portion of the lower reinforcing panel 50B is joined to the upper outer wall portion 51, and a lower portion of the lower reinforcing panel 50B is joined to a lower portion of the side sill inner panel 21. Furthermore, the vehicle side structure of the present embodiment includes side members 17 that are arranged on the vehicle front side of the side sills 20. Hereinafter, each member will be described.

First, the side members 17 will be described. The side members 17 of the present embodiment are arranged on both outer sides of the vehicle front portion in the vehicle width direction at a distance from each other in the vehicle width direction and are arranged on the inner side of front wheels (not shown) in the vehicle width direction. The side members 17 are members with high rigidity that are formed of a metal material and constitute parts of a vehicle body frame of the side structure.

Each side member 17 includes a straight portion 17a that extends in the vehicle front-rear direction and an inclined portion 17b that is arranged behind the straight portion 17a as shown in Figure 1. Although detailed illustration is omitted, the inclined portion 17b is joined to a rear portion of the straight portion 17a and extends while inclined outward in the vehicle width direction as it extends from the rear portion of the straight portion 17a toward the vehicle rear side. Moreover, the length of the inclined portion 17b in the vehicle front-rear direction becomes longer as it extends toward the vehicle rear side. The inclined portion 17b has a U cross-sectional shape opened upward.

An inner portion of the inclined portion 17b in the vehicle width direction is joined to a lower surface of the floor panel 15. An outer portion of the inclined portion 17b in the vehicle width direction is joined to the side sill 20 and a front pillar 10. Furthermore, a reinforcing panel 16 constituting a floor portion is joined to an upper portion of the inclined portion 17b.

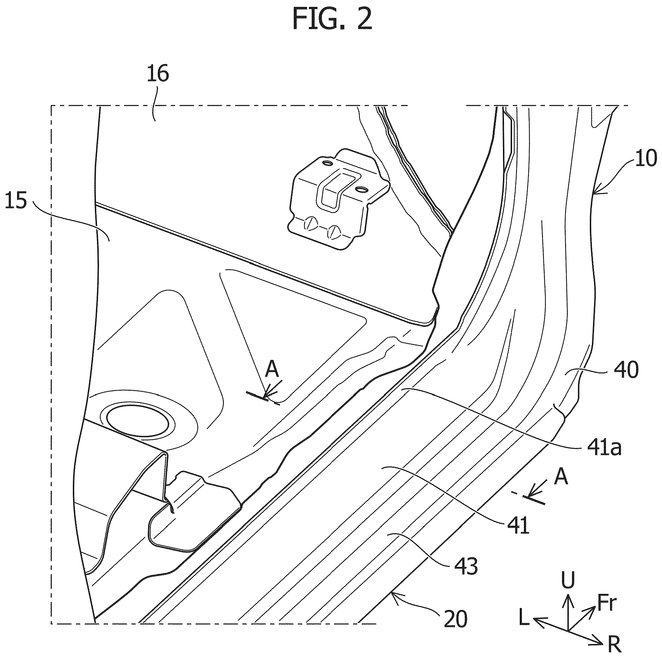

The reinforcing panel 16 is a panel that is joined to a front end of the floor panel 15, extends on the vehicle front side from the front end, and extends in the vehicle width direction as shown in Figure 2, and is formed of a metal material. The reinforcing panel 16 is arranged to block an opening of the U sectional shape of the inclined portion 17b of the side member 17, and the reinforcing panel 16 and the side member 17 constitute a closed section structure. Furthermore, an outer portion of the reinforcing panel 16 is joined to a lower portion of a pillar inner panel 11, which will be described later, of the front pillar 10. The straight portion 17a of the side member 17 is joined to the side sill 20 and the pillar inner panel 11 via the inclined portion 17b and the reinforcing panel 16.

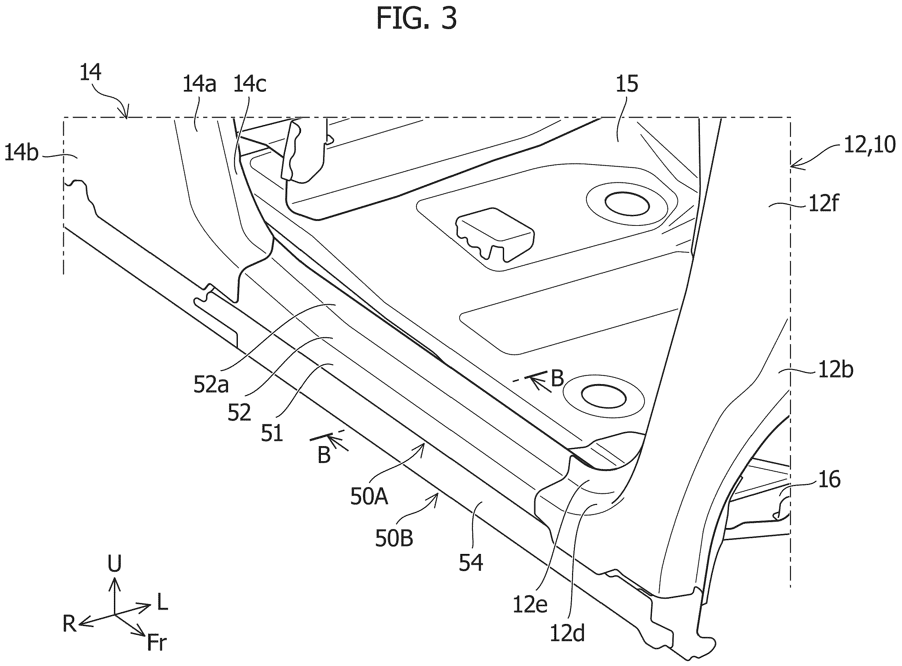

Next, the front pillar 10 will be described. The front pillar 10 is arranged at a front portion of a side door opening portion 19 and extends in the vehicle up-down direction as shown in Figures 1 to 3. The front pillar 10 includes the pillar inner panel 11 and a pillar outer panel 12 as shown in Figures 2 and 3. The pillar inner panel 11 includes an inner wall portion 11a, a front wall portion 11b, and a rear wall portion 11d.

The inner wall portion 11a is a part facing the vehicle inner side and extending in the vehicle up-down direction. A lower portion of the inner wall portion 11a is joined to the reinforcing panel 16 and the inclined portion 17b of the side member 17. The rear wall portion 11d is a part extending outward from a rear end of the inner wall portion 11a and facing the rear side, and a lower portion of the rear wall portion 11d is curved rearward as it extends downward and is joined to an inner upper surface portion 25 of the side sill inner panel 21, which will be described later, of the side sill 20. An outer end of the rear wall portion 11d in the vehicle width direction is provided with a rear flange 11e projecting rearward, and an intermediate portion of an upper inner flange 25a, which will be described later, of the side sill inner panel 21 in the vehicle front-rear direction, the pillar outer panel 12, and the like are joined to the rear flange 11e.

The front wall portion 11b is a part extending outward from a front end of the inner wall portion 11a and facing the front side, and a lower portion of the front wall portion 11b is joined to the inclined portion 17b of the side member 17, an outer portion of a dash panel, which is not shown, and the like. An outer end of the front wall portion 11b in the vehicle width direction is provided with a front flange 11c projecting forward, and a front end portion of the side sill inner panel 21, a front portion of the upper inner flange 25a of the side sill inner panel 21, the pillar outer panel 12, and the like are joined to the front flange 11c.

The pillar outer panel 12 is a member joined to the outer side of the pillar inner panel 11 and includes a front wall portion 12b, a rear wall portion 12d, and an outer wall portion 12f as shown in Figure 3. The rear wall portion 12d of the pillar outer panel 12 faces the rear side, and a lower portion of the rear wall portion 12d is curved rearward as it extends downward and is joined to the outer upper surface portion 52 of a strengthening portion (the upper reinforcing panel 50A), which will be described later, of the side sill 20. An inner end of the rear wall portion 12d is provided with a rear flange 12e, and the rear flange 11e of the rear wall portion 11d of the pillar inner panel 11, the upper inner flange 25a of the side sill inner panel 21, and the like are joined to the rear flange 12e by spotwelding. The outer wall portion 12f is a wall portion that extends forward from an outer end of the rear wall portion 12d in the vehicle width direction, and a lower portion of the outer wall portion 12f is joined to an outer wall portion 51, 54, which will be described later, of the strengthening portion (the upper reinforcing panel 50A and lower reinforcing panel 50B). The front wall portion 12b extends inward in the vehicle width direction from a front end of the outer wall portion 12f.

Although description based on illustration is omitted, an annular pillar closed section structure penetrating in the up-down direction is composed of the pillar inner panel 11 and the pillar outer panel 12 for the front pillar 10, and a front portion of the side sill 20 is joined to a lower portion of the pillar closed section structure.

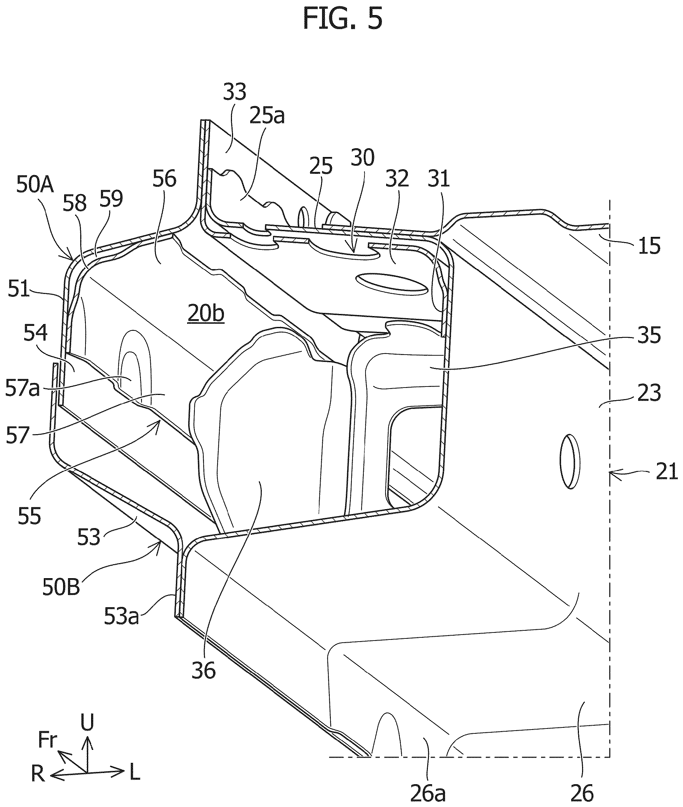

Next, the side sill 20 will be described. The side sill 20 is a part constituting a lower portion of a vehicle body side portion and is arranged at a lower portion of the side door opening portion 19, for example, as shown in Figure 1. Furthermore, the side sill 20 is a part extending in the vehicle front-rear direction as shown in Figure 1 and is joined to an outer portion of the floor panel 15 in the vehicle width direction as shown in Figures 2 and 3. The side sill 20 of the present embodiment includes the side sill inner panel 21 and a lower portion of the side body outer panel 40 that is arranged on the outer side of the side sill inner panel 21 in the vehicle width direction and constitutes the outer side of the side sill 20 as shown in Figure 5, and the side sill closed section structure 20a is composed of the side sill inner panel 21 and the lower portion of the side body outer panel 40. Furthermore, the upper reinforcing panel 50A, the lower reinforcing panel 50B, an outer reinforcement 55 (reinforcement), an inner reinforcement, an outer bulkhead 36, and an inner bulkhead 35 are included inside the side sill closed section structure 20a.

The side body outer panel 40 is a panel with high rigidity constituting a part of the outermost part of the vehicle body and includes a design surface facing the vehicle outer side. The lower portion of the side body outer panel 40 extends in the vehicle front-rear direction and is arranged at, for example, the lower portion of the side door opening portion 19, a lower portion of a center pillar 14, and a lower portion of a rear side door opening portion.

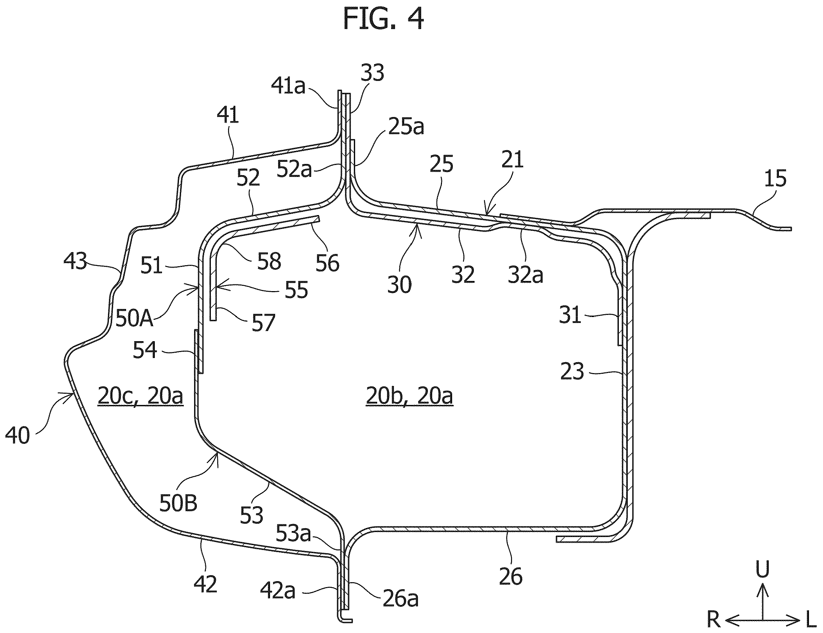

The lower portion of the side body outer panel 40 constituting the outer side of the side sill 20 is arranged at the lower portion of the side door opening portion 19 and includes an upper surface portion 41, a lower surface portion 42, and a side portion 43 as shown in Figures 1 and 4. The upper surface portion 41 faces the upper side and extends in the vehicle front-rear direction. The lower surface portion 42 is arranged at a distance on the lower side of the upper surface portion 41 and is inclined downward as it extends inward in the vehicle width direction. The side portion 43 is a part connecting an outer end of the upper surface portion 41 to an outer end of the lower surface portion 42. An inner end of the upper surface portion 41 is provided with the upper flange 41a projecting upward and extending in the vehicle front-rear direction, and an inner end of the lower surface portion 42 is provided with a lower flange 42a projecting downward and extending in the vehicle front-rear direction. The upper flange 41a is joined to a vertical wall portion 33 of the inner reinforcement 30, and the lower flange 42a is joined to a lower outer flange 53a of the lower reinforcing panel 50B.

The upper reinforcing panel 50A is arranged on the inner side of the side portion 43 in the vehicle width direction at the lower portion of the side body outer panel 40 and extends in the vehicle front-rear direction as shown in Figures 4 and 5. The upper reinforcing panel 50A includes the upper outer wall portion 51, the outer upper surface portion 52, and the upper outer flange 52a.

The upper outer wall portion 51 faces outward in the vehicle width direction, extends in the vehicle front-rear direction, and is arranged at a distance on the inner side of the side portion 43 of the side body outer panel 40 in the vehicle width direction. An upper portion of a lower outer wall portion 54, which will be described later, of the lower reinforcing panel 50B is joined to a lower portion of the upper outer wall portion 51 by spotwelding. The outer upper surface portion 52 extends inward in the vehicle width direction from an upper end of the outer wall portion 51 and extends in the vehicle front-rear direction. Furthermore, the outer upper surface portion 52 is arranged at a distance on the lower side of the upper surface portion 41 of the side body outer panel 40. The upper outer flange 52a projects upward from an inner end of the outer upper surface portion 52 in the vehicle width direction and extends in the vehicle front-rear direction. The upper outer flange 52a is joined to an upper portion of the vertical wall portion 33, which will be described later, by spotwelding.

The lower reinforcing panel 50B includes the lower outer wall portion 54, an outer bottom surface portion 53, the outer upper surface portion 52, the lower outer flange 53a as shown in Figures 4 and 5. The lower outer wall portion 54 faces outward in the vehicle width direction, extends in the vehicle front-rear direction, and is arranged at a distance on the inner side of the side portion 43 of the side body outer panel 40 in the vehicle width direction similarly to the upper outer wall portion 51. An upper portion of the upper outer wall portion 51 of the upper reinforcing panel 50A is joined to an upper portion of the lower outer wall portion 54 by spotwelding.

The outer bottom surface portion 53 extends inward in the vehicle width direction from a lower end of the lower outer wall portion 54 and extends in the vehicle front-rear direction. The outer bottom surface portion 53 in this example is inclined downward as it extends inward in the vehicle width direction. In addition, the outer bottom surface portion 53 is arranged at a distance on the upper side of the lower surface portion 42 of the side body outer panel 40. The lower outer flange 53a projects downward at from the inner end of the outer bottom surface portion 53 in the vehicle width direction and extends in the vehicle front-rear direction. The lower outer flange 53a is joined to a lower inner flange 26a, which will be described later, of the side sill inner panel 21 by spotwelding.

The outer reinforcement 55 is a member arranged on the inner side of the upper reinforcing panel 50A and extends in the vehicle front-rear direction as a whole as shown in Figures 4, 5, and 7. The outer reinforcement 55 includes an upper joined surface portion 56 and an outer joined surface portion 57.

The upper joined surface portion 56 has a plate shape facing upward and extends in the vehicle front-rear direction. The upper joined surface portion 56 is provided with a plurality of upper bulging portions 56a bulging upward, and these upper bulging portions 56a are arranged at a distance from each other in the vehicle front-rear direction. Top portions of the upper bulging portions 56a have flat surfaces, and the top portions are spotwelded to the upper outer upper surface portion.

The outer joined surface portion 57 is a side wall extending downward from an outer end of the upper joined surface portion 56 in the vehicle width direction. An outer joined portion is provided with a plurality of outer bulging portions 57a bulging outward in the vehicle width direction, and these outer bulging portions 57a are arranged at a distance from each other in the vehicle front-rear direction similarly to the upper bulging portions 56a. Outer end surfaces of the outer bulging portions 57a are spotwelded to the upper portion of the upper outer wall portion 51. A lower portion of the upper outer wall portion 51 located on the side further downward than the joined portion between the outer joined surface portion 57 and the lower portion of the upper outer wall portion 51 is joined to the upper portion of the lower outer wall portion 54.

Next, the side sill inner panel 21 will be described. The side sill inner panel 21 includes an inner wall surface portion 23, an inner upper surface portion 25, an inner bottom surface portion 26, the upper inner flange 25a, and the lower inner flange 26a as shown in Figures 3, 4, and 6. The inner wall surface portion 23 is arranged at a distance on the inner side of the outer wall portion 51 of the strengthening portion (the upper reinforcing panel 50A) in the vehicle width direction, faces inward in the vehicle width direction, and extends in the vehicle front-rear direction.

The inner upper surface portion 25 extends outward in the vehicle width direction from an upper end of the inner wall surface portion 23 and extends in the vehicle front-rear direction. Furthermore, the inner upper surface portion 25 is slightly inclined upward as it extends outward in the vehicle width direction. An outer portion of the lower surface of the floor panel 15 in the vehicle width direction is joined to the inner upper surface portion 25 by spotwelding. The upper inner flange 25a projects upward from an outer end of the inner upper surface portion 25 in the vehicle width direction and extends in the vehicle front-rear direction. The upper inner flange 25a is joined to the upper outer flange 52a by spotwelding.

The inner bottom surface portion 26 extends outward in the vehicle width direction from a lower end of the inner wall surface portion 23 and extends in the vehicle front-rear direction. Note that the inner bottom surface portion 26 is arranged substantially horizontally. The lower inner flange 26a projects downward from an outer end of the inner bottom surface portion 26 in the vehicle width direction and extends in the vehicle front-rear direction. The lower inner flange 26a is joined to the lower outer flange 53a by spotwelding. Furthermore, a battery holding member for holding a battery pack (not shown) is fastened to the inner bottom surface portion 26 by a fastening member such as a bolt. Note that in the present embodiment, the lower outer flange 53a is sandwiched between the lower flange 42a provided at the lower portion of the side body outer panel 40 and the lower inner flange 26a of the side sill inner panel 21, and three components, namely the lower flange 42a, the lower outer flange 53a, and the lower inner flange 26a are joined in an overlapping manner.

The inner reinforcement 30 is a member arranged on the inner side of the side sill inner panel 21 and extends in the vehicle front-rear direction as a whole as shown in Figures 4 and 5. The inner reinforcement 30 includes an inner joined surface portion 31, an upper surface portion 32, and the vertical wall portion 33. The inner joined surface portion 31 faces inward in the vehicle width direction, extends in the vehicle front-rear direction, and is joined to the inner wall surface portion 23 of the side sill inner panel 21 by spotwelding.

The upper surface portion 32 of the inner reinforcement 30 extends outward in the vehicle width direction from an upper end of the inner joined surface portion 31 and extends in the vehicle front-rear direction. An intermediate portion of the upper surface portion 32 in the vehicle width direction is provided with an upper joined portion 32a bulging upward, extending in the vehicle front-rear direction, and joined to the inner upper surface portion 25. The upper joined portion 32a is joined to the inner upper surface portion 25 by spotwelding. The upper surface portion 32 located on each of both sides of the upper joined portion 32a in the vehicle width direction is arranged at a distance from the inner upper surface portion 25.

The vertical wall portion 33 extends upward from an outer end of the upper surface portion 32 in the vehicle width direction and extends in the vehicle front-rear direction. The upper inner flange 25a is joined to an inner surface of the vertical wall portion 33 in the vehicle width direction by spotwelding, and the upper outer flange 52a is joined to an outer surface of the vertical wall portion 33 in the vehicle width direction by spotwelding. In the vehicle up-down direction, an upper end of the vertical wall portion 33 is arranged on the side further upward than an upper end of the upper inner flange 25a and is arranged to be substantially aligned with an upper end of the upper outer flange 52a. In the present embodiment, three components, namely a lower portion of the vertical wall portion 33, the upper inner flange 25a, and a lower portion of the upper outer flange 52a are joined in an overlapping manner.

Additionally, the upper flange 41a provided at the side body outer panel 40 is joined to an upper portion in the upper outer flange 52a by spotwelding. An upper end of the upper flange 41a is arranged to be substantially aligned with the upper end of the upper outer flange 52a, and a lower end of the upper flange 41a is arranged on the side further upward than the upper end of the upper inner flange 25a. In the present embodiment, the three components, namely the upper portion of the vertical wall portion 33, the upper portion of the upper outer flange 52a, and the upper flange 41a of the side body outer panel 40 are joined in an overlapping manner.

A front portion of the vertical wall portion 33, a front portion of the upper inner flange 25a of the side sill inner panel 21, and a front portion of the upper outer flange 52a of the strengthening portion (the upper reinforcing panel 50A) are arranged to cross the above-described pillar closed section structure of the front pillar 10 in the vehicle front-rear direction in a top view and are joined to, for example, a lower portion of the pillar inner panel 11.

The side sill closed section structure 20a is composed of the upper flange 41a of the side body outer panel 40 being joined to the vertical wall portion 33 of the inner reinforcement 30 and by the lower flange 42a of the side body outer panel 40 being joined to the lower outer flange 53a of the side sill inner panel 21 (Figure 3). The upper surface portion 32 and the inner joined surface portion 31 of the inner reinforcement 30 are arranged inside the side sill closed section structure 20a.

In addition, the inner wall surface portion 23 is arranged at a distance on the inner side of the upper outer wall portion 51 of the upper reinforcing panel 50A and the lower outer wall portion 54 of the lower reinforcing panel 50B in the vehicle width direction, and an inner closed section structure 20b is composed of the upper reinforcing panel 50A, the lower reinforcing panel 50B, and the side sill inner panel 21, in the present embodiment.

Furthermore, an outer closed section structure 20c is composed of the side portion 43 of the side body outer panel 40 being arranged at a distance on the outer side of the upper outer wall portion 51 of the upper reinforcing panel 50A and the lower outer wall portion 54 of the lower reinforcing panel 50B in the vehicle width direction, by the upper surface portion 41 of the side body outer panel 40 being arranged at a distance on the upper side of the outer upper surface portion 52, and by the lower surface portion 42 of the side body outer panel 40 being arranged at a distance on the lower side of the outer bottom surface portion 53.

In the present embodiment, the side sill closed section structure 20a is separated by the upper reinforcing panel 50A and the lower reinforcing panel 50B, and the two closed section structures (the inner closed section structure 20b and the outer closed section structure 20c) are thus constituted inside the side sill closed section structure 20a.

Next, the inner bulkhead 35 and the outer bulkhead 36 will be described. The inner bulkhead 35 is a plate-shaped member that is arranged inside the side sill closed section structure 20a, specifically, inside the inner closed section structure and includes a wall surface facing the front and rear sides. An upper portion of the bulkhead 35 is joined to the upper surface portion 32 of the inner reinforcement 30, and a lower portion of the inner bulkhead 35 is joined to the inner bottom surface portion 26 of the side sill inner panel 21. Moreover, an upper portion of an inner portion of the inner bulkhead 35 is joined to the inner joined surface portion 31 of the inner reinforcement 30, and a lower portion of the inner portion of the bulkhead 35 is joined to the inner wall surface portion 23 of the side sill inner panel 21. Note that an outer portion of the inner bulkhead 35 vertically extends and may be arranged to be aligned with the outer end of the side sill inner panel 21, for example. In the present embodiment, the outer bulkhead 36 is arranged outside the inner bulkhead 35.

The outer bulkhead 36 is a plate-shaped member that is arranged inside the side sill closed section structure 20a, specifically, inside the inner closed section structure and has a wall surface facing the front and rear sides, similarly to the inner bulkhead 35. An upper portion of the outer bulkhead 36 is joined to the upper joined surface portion 56 of the outer reinforcement 55, and a lower portion of the outer bulkhead 36 is joined to the outer bottom surface portion 53 of the lower reinforcing panel 50B. Additionally, an upper portion of an outer portion of the outer bulkhead 36 is joined to the outer joined surface portion 57 of the outer reinforcement 55, and a lower portion of the outer portion of the outer bulkhead 36 may be arranged at a distance from the lower outer wall portion of the lower reinforcing panel 50B. As described above, the outer bulkhead 36 and the inner bulkhead 35 are arranged to be aligned in the vehicle width direction. In this example, the inner portion of the outer bulkhead 36 and the outer portion of the inner bulkhead 35 are arranged to face each other. Note that the inner portion of the outer bulkhead 36 and the outer portion of the inner bulkhead 35 may be joined.

For example, a side frame extending forward from the front pillar 10 is arranged above the side member 17. If an impact load due to front collision or the like acts on the vehicle front portion, for example, the impact load is transmitted to the front pillar 10 via the side frame, which is not shown, and the side member 17. If the load is input from the side frame, which is located on the upper side of the side frame 17, to the front pillar 10, for example, some of the load is transmitted toward the lower portion of the front pillar 10. At this time, the upper portion of the front pillar 10 is deformed to fall down rearward with respect to the lower portion, the lower portion of the front pillar 10 is deformed to sink downward, and the load is input to the upper portion of the side sill 20.

At this time, the load is input from the outer upper surface portion 52 of the upper reinforcing panel 50A, is transmitted to the upper outer wall portion 51, and is further input to the lower outer wall portion 54. In the present embodiment, the lower portion of the upper outer wall portion 51 and the upper portion of the lower outer wall portion 54 are joined, rigidity at the joined portion in the vehicle up-down direction is thus improved, and deformation of the side sill is reduced.

Furthermore, in the present embodiment, the plate thickness of the upper reinforcing panel 50A is set to be greater than the plate thickness of the lower reinforcing panel 50B. Since the load is input from the front pillar 10 to the upper reinforcing panel 50A, it is possible to reduce deformation of the upper reinforcing panel 50A by increasing the plate thickness of the upper reinforcing panel 50A and increasing the rigidity thereof. Furthermore, in the present embodiment, the outer side of the side sill inner panel 21 is reinforced by the two panels (the upper reinforcing panel 50A and the lower reinforcing panel 50B), and it is thus possible to improve rigidity of the upper reinforcing panel 50A that requires a further increase in rigidity. As a result, there is no need to unnecessarily increase the plate thickness of the lower reinforcing panel 50B, and it is thus possible to reduce an increase in weight of the vehicle body.

Furthermore, in the present embodiment, the side sill 20 includes the outer reinforcement 55 that is joined to the outer upper surface portion 52 and the upper outer wall portion 51 of the upper reinforcing panel 50A inside the side sill closed section structure 20a. It is possible to enhance rigidity of the outer upper surface portion 52 and the upper outer wall portion 51 of the upper reinforcing panel 50A by the outer reinforcement 55 being provided. As a result, it is possible to effectively transmit the load input from the front pillar 10 to the vehicle rear side.

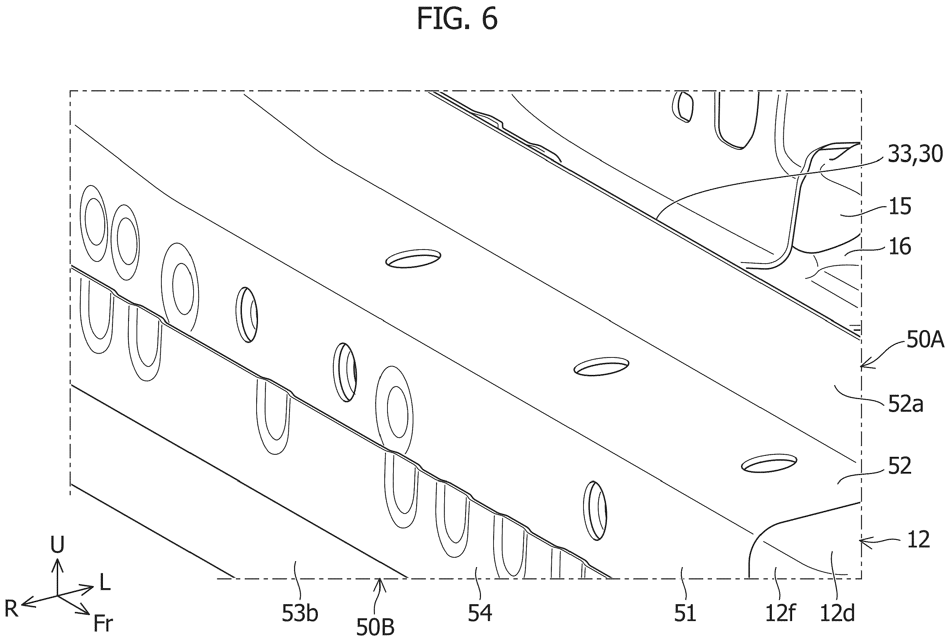

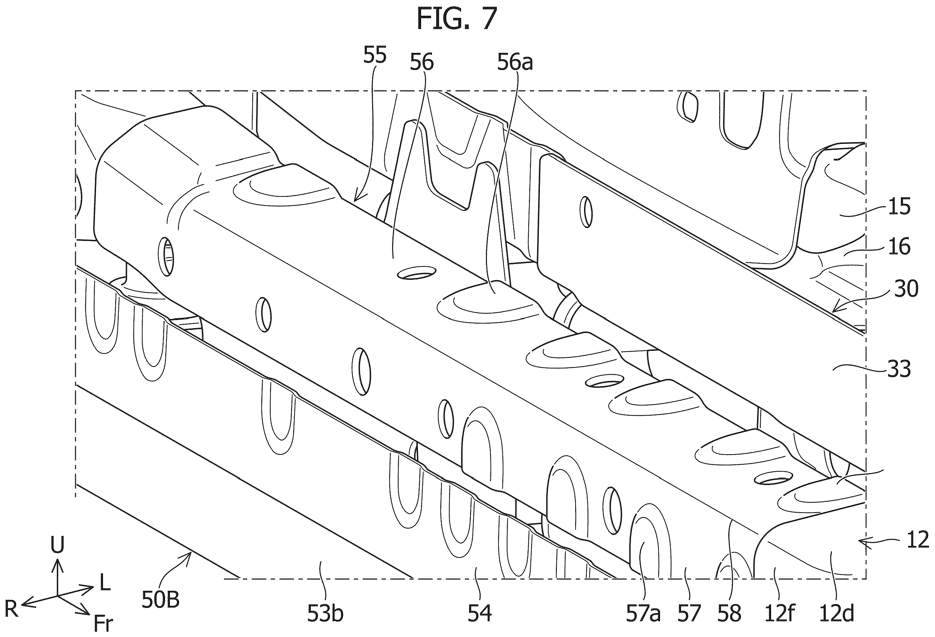

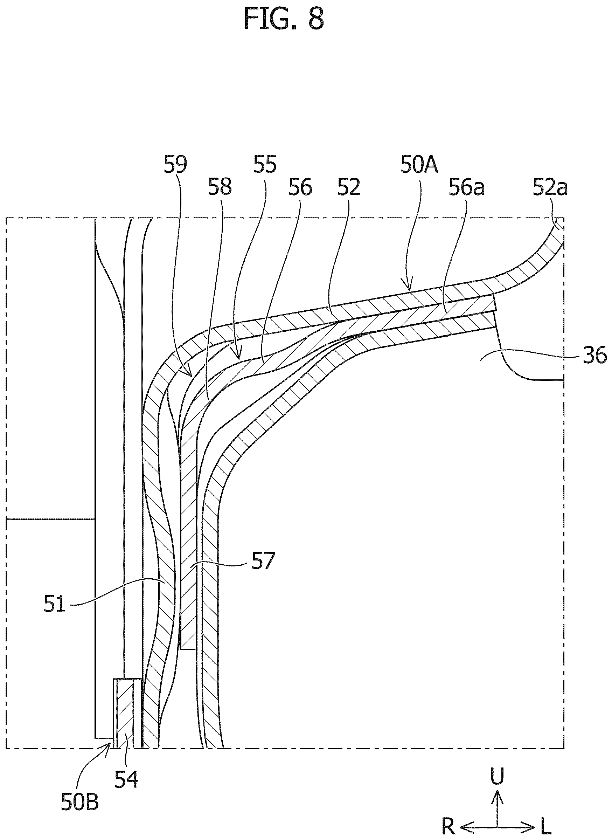

Furthermore, the outer reinforcement 55 includes the upper joined surface portion 56 (upper joined portion) that is arranged below the outer upper surface portion, the outer joined surface portion 57 (outer joined portion) that is arranged on the inner side of the upper outer wall portion (outer portion), and an angular portion 58 that is formed by the upper joined surface portion 56 and the outer joined surface portion 57 as shown in Figures 6 and 7. The upper joined surface portion 56 is provided with the upper bulging portions 56a bulging upward as described above, and the top portions of the upper bulging portions 56a are joined to the outer upper surface portion 52. A gap 59 is formed between the upper bulging portions 56a and the angular portion 58 as shown in Figures 8.

It is possible to maintain the shape of the upper reinforcing panel 50A by the gap 59 being provided, and rigidity of the upper reinforcing panel 50A is thus improved. As a result, rigidity of the side sill 20 is improved. Furthermore, in this example, a plurality of joined portions are formed by the plurality of upper bulging portions 56a being arranged at a distance from each other in the vehicle front-rear direction. Since rigidity of the outer upper surface portion 52 is thus improved, it is possible to effectively receive the load transmitted from the front pillar 10. As a result, it is possible to effectively transmit the load to the vehicle rear side. Furthermore, in the present embodiment, rigidity of the upper outer wall portion 51 is further improved since the plurality of outer bulging portions 57a being joined to the upper outer wall portion.

Furthermore, in the present embodiment, the upper reinforcing panel 50A extends in the vehicle front-rear direction between the front pillar 10 and the center pillar 14 arranged on the vehicle rear side of the front pillar 10 and is joined to the front pillar 10 and the center pillar 14 as shown in Figure 3.

The center pillar 14 includes a front wall portion 14a, an outer wall portion 14b, and a flange 14c as shown in Figure 3. A lower portion of the front wall portion 14a of the center pillar 14 is curved forward as it extends downward and is joined to a rear portion of the outer upper surface portion 52 of the upper reinforcing panel 50A. The flange 14c projects forward from the inside of the front wall portion 14a. In addition, the flange 14c provided at the lower portion of the front wall portion 14a projects upward and is joined to the upper outer flange 52a. The outer wall portion 14b of the center pillar 14 is joined to a rear portion of the upper outer wall portion 51 of the upper reinforcing panel 50A.

It is possible to effectively transmit the load transmitted to the front pillar 10 to the center pillar 14 via the side sill 20 by the rear portion of the upper reinforcing panel 50A being joined to the lower portion of the center pillar 14, and it is possible to reduce deformation of the intermediate portion of the side sill 20 in the vehicle front-rear direction (the intermediate portion of the lower portion of the side door opening portion 19 in the vehicle front-rear direction). Since the front and the rear sides of the upper reinforcing panel 50A are joined to the pillars 10 and 14, in particular, it is possible to reduce deformation by the upper portion of the side sill closed section structure 20a of the side sill 20 and to efficiently transmit the load.

Since the inner reinforcement 30 is provided, and the front portion of the vertical wall portion 33 of the inner reinforcement 30, the front portion of the upper inner flange 25a of the side sill inner panel 21, and the front portion of the upper outer flange 52a of the strengthening portion (the upper reinforcing panel 50A) are joined to the closed section of the front pillar 10, high rigidity of the front portion of the side sill 20 and the lower portion of the front pillar 10 is secured against the load input to the front pillar 10, for example.

Furthermore, rigidity of the side sill inner panel 21 is improved by the vertical wall portion 33 of the inner reinforcement 30, and it is possible to reduce excessive deformation of the side sill 20. When a load acts downward from the upper portion of the front pillar 10, for example, it is possible to effectively reduce deformation of the front portion of the side sill 20 and the lower portion of the front pillar 10 by the vertical wall portion 33, and furthermore, it is possible to effectively disperse the load to the inner upper surface portion 25 and the inner wall surface portion 23 of the side sill inner panel 21.

The description of the present embodiment is an example for describing the present invention and is not intended to limit the invention as claimed in the claims. Furthermore, the configurations of the respective portions of the present invention are not limited to those of the above embodiment, and various alterations can be made within the technical scope as claimed in the claims.

Although the outer reinforcement 55 with an L cross section is provided in the present embodiment, the present invention is not limited thereto. For example, the plate thicknesses of the outer upper surface portion 52 and the upper outer wall portion 51 of the upper reinforcing panel 50A may be increased, and a member extending in the vehicle front-rear direction may be joined to an angular portion therebetween.

### [Reference Signs List]

- 10: Front pillar
- 11: Pillar inner panel
- 11a: Inner wall portion
- 11b: Front wall portion
- 11c: Front flange
- 11d: Rear wall portion
- 11e: Rear flange
- 12: Pillar outer panel
- 12b: Front wall portion
- 12d: Rear wall portion
- 12e: Rear flange
- 12f: Outer wall portion
- 13: Pillar closed section structure
- 14: Center pillar
- 14a: Front wall portion
- 14b: Outer wall portion
- 14c: Flange
- 15: Floor panel
- 16: Reinforcing panel
- 17: Side member
- 17a: Straight portion
- 17b: Inclined portion
- 19: Side door opening portion
- 20: Side sill
- 20a: Side sill closed section structure (closed section structure)
- 20b: Inner closed section structure
- 20c: Outer closed section structure
- 21: Side sill inner panel (inner panel)
- 23: Inner wall surface portion
- 25: Inner upper surface portion
- 25a: Upper inner flange
- 26: Inner bottom surface portion
- 26a: Lower inner flange
- 30: Inner reinforcement
- 31: Inner joined surface portion
- 32: Upper surface portion
- 32a: Upper joined portion
- 33: Vertical wall portion
- 35: Inner bulkhead
- 36: Outer bulkhead
- 40: Side body outer panel (outer panel)
- 41: Upper surface portion
- 41a: Upper flange
- 42: Lower surface portion
- 42a: Lower flange
- 43: Side portion
- 50A: Upper reinforcing panel
- 50B: Lower reinforcing panel
- 51: Upper outer wall portion
- 52: Outer upper surface portion
- 52a: Upper outer flange
- 53: Outer bottom surface portion
- 53a: Lower outer flange
- 54: Lower outer wall portion
- 55: Outer reinforcement (reinforcement)
- 56: Upper joined surface portion
- 56a: Upper bulging portion
- 57: Outer joined surface portion
- 57a: Outer bulging portion
- 58: Angular portion
- 59: Gap

## Claims

1. A vehicle side structure comprising: side sills that are arranged on both sides in a vehicle width direction and extend in a vehicle front-rear direction; and front pillars that extend toward a vehicle upper side from front portions of the side sills,
each of the side sills including an inner panel and an outer panel arranged on an outer side of the inner panel in the vehicle width direction, a closed section structure being composed of the inner panel and the outer panel, **characterized in that**:
each of the side sills further includes an upper reinforcing panel that is arranged inside the closed section structure and extends in the vehicle front-rear direction, and a lower reinforcing panel that is arranged inside the closed section structure and below the upper reinforcing panel and extends in the vehicle front-rear direction;
the upper reinforcing panel includes an upper joined portion that is joined between an upper portion of the inner panel and an upper portion of the outer panel, an upper surface portion that projects outward in the vehicle width direction from a lower end of the upper joined portion, and an outer portion that extends toward a vehicle lower side from an outer end of the upper surface portion in the vehicle width direction; and
an upper portion of the lower reinforcing panel is joined to the outer portion, and a lower portion of the lower reinforcing panel is joined to a lower portion of the inner panel.

2. The vehicle side structure according to claim 1, wherein a plate thickness of the upper reinforcing panel is greater than a plate thickness of the lower reinforcing panel.

3. The vehicle side structure according to claim 1 or 2, wherein each of the side sills further includes a reinforcement that is joined to the upper surface portion and the outer portion of the upper reinforcing panel inside the closed section structure.

4. The vehicle side structure according to claim 3, wherein
the reinforcement includes an upper joined portion that is arranged below the upper surface portion, an outer joined portion that is arranged on an inner side of the outer portion, and an angular portion that is formed by the upper joined portion and the outer joined portion, and
the upper joined portion is provided with upper bulging portions bulging on the vehicle upper side, top portions of the upper bulging portions are joined to the upper surface portion, and gaps are formed between the upper bulging portions and the angular portion.

5. The vehicle side structure according to claim 1, wherein the upper reinforcing panel extends in the vehicle front-rear direction between the front pillar and a center pillar that is arranged on a vehicle rear side of the front pillar and is joined to the front pillar and the center pillar.
